# EUROPEAN PATENT SPECIFICATION

(11) **EP 2 564 682 B1**
(45) Date of publication and mention of the grant of the patent: **24.09.2014**
(21) Application number: 12182084.9
(22) Date of filing: 28.08.2012
(51) Int. Cl.: A01C 11/02, A01G 9/10

(54) **Method and apparatus for transfer of seedling with substrate**
Verfahren und Vorrichtung zur Übertragung von Keimling mit Substrat
Procédé et dispositif pour le transfert des plantules avec le substrat

(30) Priority: 29.08.2011 BE 201100514
(43) Date of publication of application: 06.03.2013
(73) Proprietor: Hortiplan, 2860 Sint-Katelijne-Waver (BE)
(72) Inventor: Courtois, Jan, 2860 Sint-Katelijne-Waver (BE); Hadermann, Dries, 2840 Reet (BE); Pijl, Pieter, 9120 Melsele (BE); Tuyteleers, Bert, 2550 Kontich (BE)
(74) Representative: Duyver, Jurgen Martha Herman

(56) References cited:
- EP-A1- 0 948 886
- EP-A1- 2 090 148
- WO-A1-00/25567
- JP-A- H 104 792
- JP-A- 2000 354 410
- US-A- 5 054 831
- US-A- 5 911 631
- US-A1- 2009 264 051

## Description

The present invention relates to a method for lifting a substrate, provided with at least one seedling, from a tray bound by a raised edge, in accordance with the preamble of the first claim.

The present invention also relates to a plate for carrying out the method according to the present invention and a device comprising such a plate, for carrying out the method according to the present invention.

JP10004792 A and JP2000354410 A describe such a method for lifting a substrate, provided with at least one seedling, from a tray bound by a raised edge. In the method described, a plate, a support, is slid with a front end under the substrate along a sliding direction until the substrate rests on the support, and the support finally lifts the substrate provided with the seedling from the tray. Such methods are used in the context of automation of, for example, agriculture and horticulture. However, since the tray is bound by a raised edge, to position the plate under the substrate, an edge of the substrate with the seedlings is lifted. However, lifting the edge of the substrate is not easy. In addition, lifting the edge of the substrate may cause an increased risk of damaging the seedlings. For example, JP10004792 A describes the use of a hook-shaped element engaging the substrate, such that there is a risk that, for example, the roots of the seedlings may be damaged ; for example, JP2000354410 A describes that the seedlings themselves are gripped by a gripper to lift the edge of the substrate, for example, such that there is a risk of damaging the gripped piece, and wherein already a significant piece should have grown up.

It is therefore an object of the present invention to provide a method for lifting a substrate, provided with at least one seedling, from a tray bound by a raised edge, wherein the risk of damaging the seedlings, when lifting the substrate from the tray, is limited.

This is achieved with a method having the technical features of the characterizing part of the first claim.

To this end, the support is slid under the substrate by inserting the first part of the plate under at least a part of the substrate, by inserting the first part of the plate between the raised edge of the tray and the substrate, and by subsequently moving the plate and the tray relative to each other, such that the plate rotates relative to the tray about an axis of rotation between the first part and a second part, opposite to the first part of the plate, and the second part moves towards the support side of the tray, and the front end of the support slides along the support side of the tray between the bottom side of the substrate and the support side of the tray along the sliding direction. The first part is located closer to the front end than the second part, and the first part has a length along the sliding direction which is substantially equal to the height of the substrate. By sliding the front end of the support between the bottom side of the substrate and the support side of the tray along the sliding direction, the substrate is transferred, once slid onto the first part, from the first part to the second part.

By using such a plate in combination with such a movement of the plate relative to the substrate, the first part of the plate can be placed under the substrate without substantially contacting the seedlings, thus decreasing the risk of damages.

According to preferred embodiments of the present invention, the plate is divided into a first and a second part along the sliding direction by a bend transverse to the sliding direction. The first part is located closer to the front end than the second part, and the first part has a length along the sliding direction which is substantially equal to the height of the substrate. The support is slid under the substrate by inserting the first part of the plate under at least a part of the substrate, by inserting the first part of the plate between the raised edge of the tray and the substrate, subsequently moving the plate and the tray relative to each other, such that the plate relative to the tray rotates about an axis of rotation along the bend, and the bend moves towards the support side of the tray, and the front end of the support slides along the support side of the tray between the bottom of the substrate and the support side of the tray along the sliding direction. Due to the sliding of the front end of the support between the bottom side of the substrate and the support side of the tray along the sliding direction, the substrate is transferred, once slid onto the first part, from the first part to the second part.

By using such a plate in combination with such a movement of the plate relative to the substrate, the first part of the plate can be positioned under the substrate without substantially contacting the seedlings such that the risk of damaging decreases. It has been found that the bend in the plate allows to prevent that the seedlings may be damaged, particularly the seedlings, when carrying out the method, that first come in contact with the first part, and/or that the bend prevents the seedlings from tipping over when carrying out the method, which hampers further processing of the seedlings, in particular for example by robot systems and/or conveyor belts.

Furthermore, additional elements for lifting the edge of the substrate may be omitted, such that the number of components necessary for carrying out the method, can be reduced and the reliability can be increased.

CH687797 A5 describes a method in which no use is made of a plate as a support, but on the other hand of a flexible film or of a flexible piece of fabric that is brought under the plants by moving a tension element under the plants in which the film or fabric will be rolled out under the plants. The reliability of such a method is, however, limited by the large number of moving parts in the vicinity of the substrate.

According to preferred embodiments of the present invention, the substrate abuts the raised edge. In such a manner, the substrate fills the whole support side of the tray, and the support side of the tray is used in an optimal way.

According to preferred embodiments of the present invention, the substrate is provided with a plurality of seedlings.

According to preferred embodiments of the present invention, the substrate is composed of separate partial substrates, wherein each partial substrate is provided with at least one seedling. Although in such applications, it is difficult to apply the method used in the state of the art since only a limited number of partial substrates are lifted up by using the well-known techniques, the present invention allows to lift the entire substrate from the tray.

According to preferred embodiments of the present invention, the length of the front end transverse to the sliding direction is equal to the distance between two opposite parts of the raised edge such that the front end extends between the two opposite parts of the raised edge. Indeed, such a plate allows to support in a single movement of the plate the entire substrate, which is particularly advantageous if the substrate is comprised of partial substrates in order to lift all partial substrates with a single sliding movement of the plate from the tray. Preferably, the length of the front end transverse to the sliding direction is equal to the longest inner side of the support side, which is usually rectangular, such that the length over which the plate slides under the substrate along the sliding direction is limited to the length of the shortest side, which results in a shorter amount of time to carry out the method according to the invention, than if the length over which the plate moves under the substrate is limited to the length of the longest side. As such trays may typically have a support side of 40 cm to 60 cm, the length of the front end transverse to the sliding direction is preferably 60 cm.

According to preferred embodiments of the present invention, the first and the second part are substantially flat, or more preferably flat since such a design of the plate allows a smooth sliding of the substrate over the plate.

According to preferred embodiments of the present invention, the angle in degrees between the first and the second part formed by the bend is substantially equal to 180 ° - Bgtg (h/(B-x.b)), where h is the depth of the tray, B is the length of the inside of the tray measured along the sliding direction, b is the height of the substrate, and x is a factor which varies between 0.8 and 1.4. With such an angle, it has been found that the plate over the entire inner length of the support side of the tray can be slid along the sliding direction.

The plate is in a sliding direction divided by a bend into a first and a second part, transverse to the sliding direction, wherein the first part is positioned closer to the front end than the second part.

The length of the first part along the sliding direction is substantially equal to 3 cm - 8 cm, preferably 4 cm - 7 cm, more preferably 4 cm - 6 cm, and is most preferably 5 cm. Such dimensions correspond indeed to the common heights of the substrate 4 cm, 5 cm, 6 cm, 8 cm. The most common height is 5 cm. However, by multiplying the height of the substrate mostly used by a factor between 0.8 and 1.4, it was found that also other heights can be dealt with. Hence, if the most common height of the substrate is 5 cm, also substrates with a height between 4 cm and 7 cm can reasonably successfully be processed.

Furthermore, the invention relates to a device for lifting a substrate, provided with at least one seedling, from a tray bound by a raised edge, in accordance with the invention. The device is provided with support moving means provided to slide a support with the front end of the support under the substrate along a bottom side of the substrate, oriented towards a support side of the tray along a sliding direction until the substrate rests on the support, and to subsequently lift the substrate provided with the seedling from the tray by means of the support, wherein the support is a plate, The first part has a length along the sliding direction which is substantially equal to the height of the substrate. The support moving means are provided to slide the support under the substrate by inserting a first part of the plate under at least a part of the substrate, by inserting the first part of the plate between the raised edge of the tray and the substrate, and by moving the plate and the tray relative to each other, such that the plate rotates in respect of the tray about an axis of rotation between the first part and a second part of the plate, opposite to the first part, and the second part moves towards the support side of the tray during rotation, and the front end of the support slides along the support side of the tray between the bottom side of the substrate and the support side of the tray along the sliding direction.

Preferably, the support is a plate according to the invention. More preferably, the axis of rotation of the rotation of the plate is located relative to the tray along the bend, and the bend moves towards the support side of the tray during this rotation.

The invention will be further elucidated with reference to the annexed figures.
Figure 1a shows an overview of a plate for a preferred embodiment of the device and method according to the present invention.
Figure 1b shows a top view of the plate according to Figure 1a.
Figure 1c shows a side view of the plate according to Figure 1a.
Figure 2 shows a side view of the plate according to Figure 1 a in a tray when carrying out a preferred embodiment of the method according to the present invention.
Figures 3a - 3k shows some moments when carrying out a preferred embodiment of the method according to the present invention.
   1. support
   2. first part support
   3. second part support
   4. front end support
   5. plate
   6. tray
   7. raised edge
   8. substrate
   9. support side tray
   10. sliding direction
   11. bend
   12. bottom substrate
   13. partial substrate
   14. support moving means
   15. coupling means
   16. first sides of the raised edge
   17. second sides of the raised edge
   18. arm

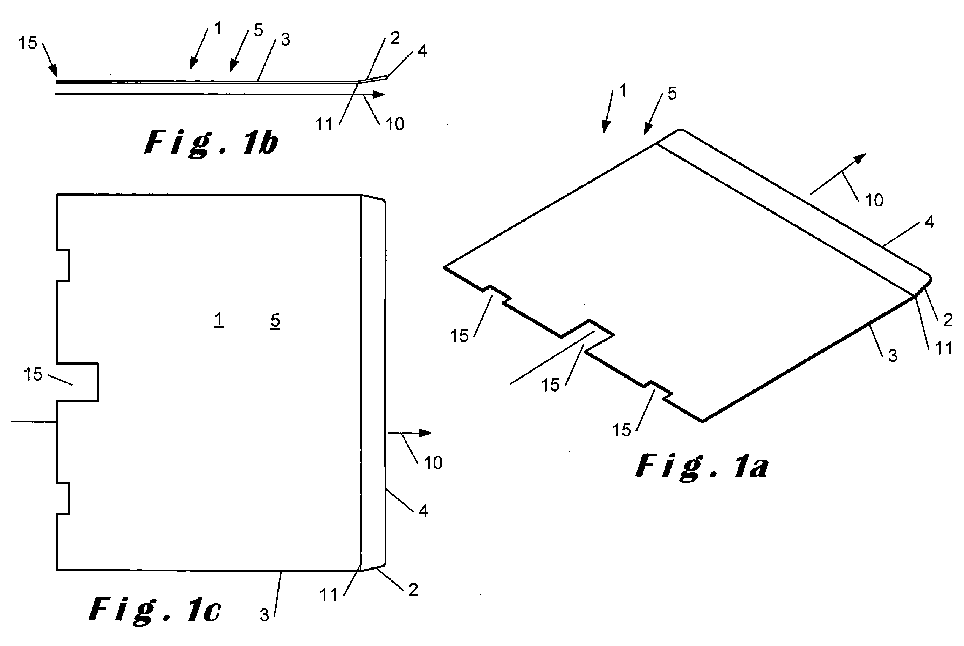

Figure 1a shows an overview of a support 1 for a preferred embodiment of the device and method according to the present invention.

The support 1 is a plate 5 and has a front end 4. The plate 5 has a bend 11, preferably in a sliding direction 10, transverse to the sliding direction 10. The bend is, however, not mandatory, and the bend 11 may be omitted such that the plate 5 becomes, for example, substantially flat. Preferably, the plate 5 is divided by the bend 11 in a first 2 and a second 3 part located opposite to the first part 2. The first part 2 is located closer to the front end 4 than the second part 3.

Preferably, the plate 5 is made of metal, preferably steel, more preferably stainless steel, but may be made of any material deemed suitable by the skilled person, such as for example, wood, plastic, glass, iron, copper, etc. Preferably, the strength of the plate is provided to support the weight of the substrate.

The plate 5 is provided with coupling means 15 provided to attached the plate 5 to further mechanical support moving means 14. However, this is not mandatory for the invention and the plate 5 may also be provided with handles which are provided to be grasped by human hands to manually carry out the method according to the present invention.

The front end 4 is preferably provided to be inserted between the substrate 8 and the raised edge 7. Since this is often a relatively narrow space, the front end 4 is preferably thin relative to the space between the raised edge 7 and the substrate 8. While the remaining part of the plate 5, such as for example, the second part 3, may have any thickness that is considered appropriate by the skilled person, the whole plate has the same plate thickness. However, this is not mandatory for the present invention and the thickness of the plate 5 may also be different, for example, in the sliding direction or a direction transverse to the sliding direction.

Since, when carrying out the method, the substrate will slide over the plate 8, the side of the plate which comes into contact with the substrate 8 is preferably smooth, such that a smooth sliding of the substrate 8 over the plate 5 can be obtained.

The plate is further shown in Figures 1b and 1c.

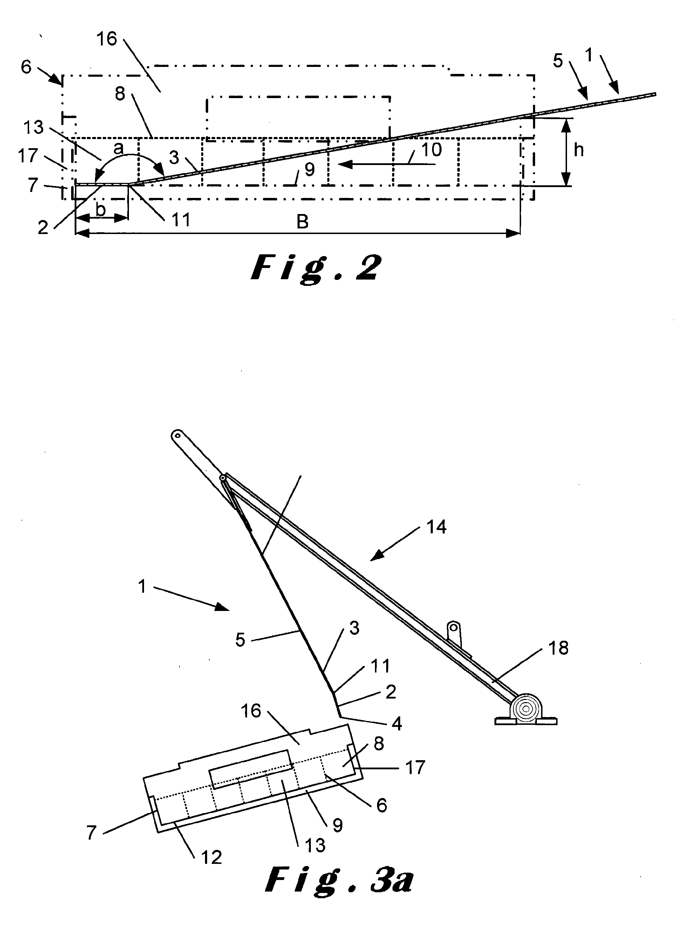

Preferably, the dimensioning of the plate 5 depends on the use of the plate 5 in the method according to the present invention. This preferred embodiment is shown in Figure 2 wherein a plate 5 is placed in a tray 6, bound by a raised edge 7, to show the ratio between the dimensions of the tray 6 with respect to the plate 5. Also, in dotted lines, the substrate 8 with optional partial substrates 13 is shown to further clarify the dimensioning. More particularly, Figure 2 shows the extreme position of the plate 5 in the tray 6 when sliding the front end 4 of the support 1 along the support side 9 of the tray 6 between the bottom side 12 of the substrate 8 and the supporting side 9 of the tray 6 along the sliding direction 10, wherein the front end 4 abuts a side of the raised edge 7 after which the substrate can be slid onto the plate 5. In this respect, the supporting side 9 of the tray 6 is the side of the tray 8 onto which the substrate rests.

The substrate 8 often contains a layer of potting soil with a certain thickness b in which at least one seedling, not shown in the figures, is present. However, the use of potting soil is not mandatory and it is, for example, also possible to make use of rock wool, coconut fibre, polyurethane foam, or other suitable substrates. Often, the substrate 8 contains several seedlings, and preferably, in such an embodiment, each seedling is comprised in its respective partial substrate13. The partial substrates 13 are often substantially cube-shaped, but can also be, for instance, rectangular. The height b of the substrate 8 is often substantially the same over the entire tray 6. The substrate 8 preferably, but not necessarily, fills the entire support side 9 of the tray 6, such that it abuts the raised edge 7. The height of the substrate may be, for example 3 cm, 4 cm, 5 cm, 6 cm, 7 cm, 8 cm or more or less. The most common dimensions are 4 cm, 6 cm, 8 cm and, especially, 5 cm.

The tray 6 is typically a standard tray used for the transport of substrates 8 and is beam-shaped. The raised edge 7 is often divided into four sides of which two first opposite sides 16 are positioned along the sliding direction 10 and two second opposite sides 17 are positioned transverse to the sliding direction 10. The most common depth h, the shortest distance between the supporting side 9 of the tray 6 and the upper edge of the raised edge 7 of the second side 17 of the tray 6 is preferably between 4 cm and 8 cm, more preferably between 5 cm and 7 cm, and is for example 6.5 cm.

The most common length B of the second sides is 40 cm. The most common length of the first sides is 60 cm. Especially in Europe, especially in Northwest Europe, the dimensions 60 cm x 40 cm are often used. However, this is not mandatory for the invention and in other parts of the world or for other crops/applications, different dimensions may be used.

The first part 2 has a length along the sliding direction 10 which is substantially equal to the height of the substrate b.

From such a dimensioning of the plate 5 and the tray 6 with respect to each other, it follows that the angle a in degrees between the first 2 and the second part 3, formed by the preferred bend 11 is substantially equal to 180 ° - Bgtg (h/(B-b')) where h is the depth of the tray 6, B is the length of the inside of the tray 6 measured along the sliding direction 10, i.e. the internal length of the first sides 16 measured along the support side 9 of the tray 6, and b' is the height of the substrate 8. Preferably, b' is equal to b multiplied by x, where x is between 0.8 and 1.4, such that also substrates can be accommodated, which differ slightly from the substrate heights most commonly used by the user. On the basis of these data, it can be calculated that the angle is preferably between about 160 ° and 175 °, more particularly between 164 ° and 170 °, most preferably, if h is equal to 6.5 cm, B is equal to 40 cm, b is equal to 5 cm and x is equal to 1, about 168 ° - 170 °, in particular approximately 169 °.

The length of the second part 3 is not critical for the present invention and may further be determined by the skilled person depending on the application of the plate 5 in the final method of the present invention. The length of the second part 3 of the plate is, for example, selected in such a way that the substrate 8 of the tray 6 can be placed completely on the plate 5, for example, by selecting the length of the second part 3 in such a way that the sum of the length of the first part 2 and the length of the second part 3 is equal to at least the length of the first sides 16 as measured along the inside of the tray.

The width of the plate 5 is preferably equal to the inner length of the second sides 17 measured along the support side 9 of the tray 6, such that in one single sliding movement, the entire substrate 8 can be loaded onto the plate 5. However, this is not mandatory for the present invention, and the width of the plate 5 can also be dimensioned such that a number of sliding movements are necessary for the substrate 8 to be lifted from the tray 6. In such an embodiment, the length of the front end 4 transverse to the sliding direction is equal to the distance between two opposite parts of the raised edge 7 such that the front end 4 extends between the two opposite parts of the raised edge 7.

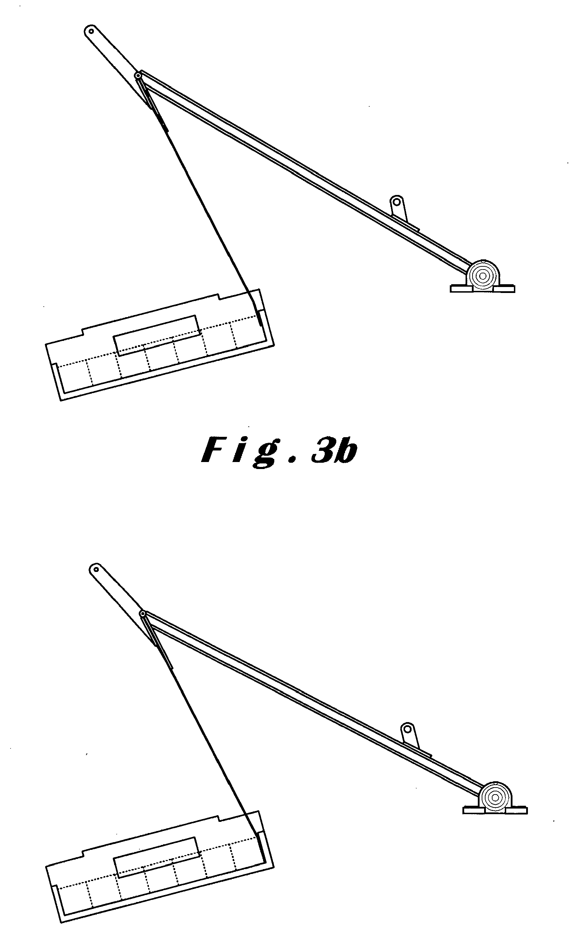

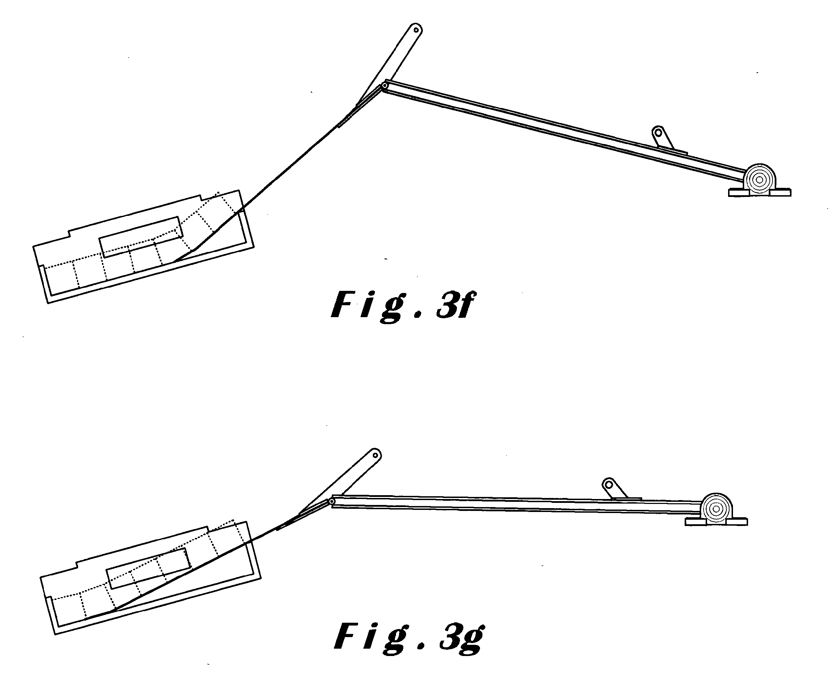

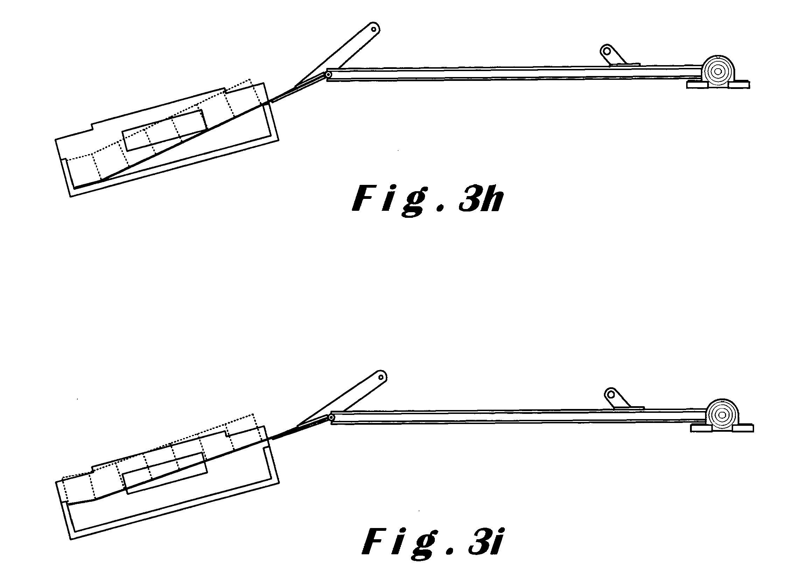

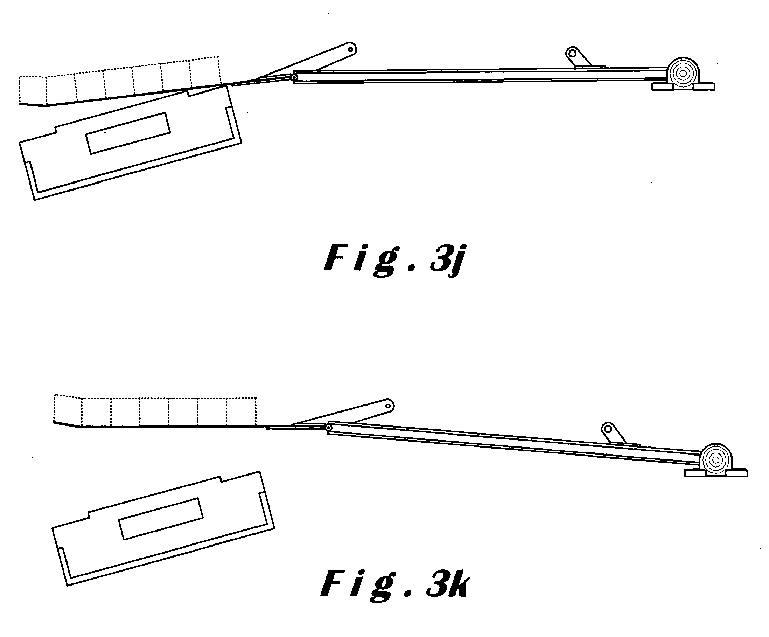

Figure 3a - Figure 3k show some steps of a preferred embodiment of the present invention in which the support 1, i.e. the plate 5, is slid with the front end 4 of the support 1, i.e., the plate 5, under the substrate 8 along a bottom side 12 of the substrate 8, oriented towards the support side 9 of the tray 6, along a sliding direction 10, until the substrate 8 rests on the support 1 and the support 1 subsequently lifts the substrate 8 provided with the seedling, from the tray 6.

The support 1, i.e., the plate 5 is slid under the substrate 8 by inserting the first part 2 of the plate 5 under at least a part of the substrate 8. This is shown in Figures 3a - 3k.

Figures 3a-3b show that the plate 5 and the tray 6 are positioned such that the first part 2 of the plate 5 is inserted between one of the second sides 17 and the substrate 8. Figures 3c - 3h show that subsequently, the plate 5 and the tray 6 are moved with respect to each other such that the plate 5 relative to the tray 6 rotates about an axis of rotation, preferably along the bend 11, (Figure 3c) and the second part 3, and preferably also the bend 11, moves towards the supporting side 9 of the tray 6 (Figures 3c - 3h). It is also shown in Figure 3c to 3h that the front end 4 of the support 1 along the supporting side 9 of the tray 6 slides between the bottom side 12 of the substrate 8 and the support side 9 of the tray 6 along the sliding direction 10. Figures 3i - 3k subsequently show that the plate 5 containing the substrate 8 moves upwards to lift the substrate 8 from the tray 6.

Although Figures 3a - 3k show that the plate 5 moves by means of support moving means 14, with respect to the tray 6, this is not mandatory for the invention and also the tray 6 may move with respect to the plate 5 by tray moving means, although not shown in the figures.

Although Figures 3a - 3k show that a device is used for carrying out the method, the method according to the present invention may also be carried out manually.

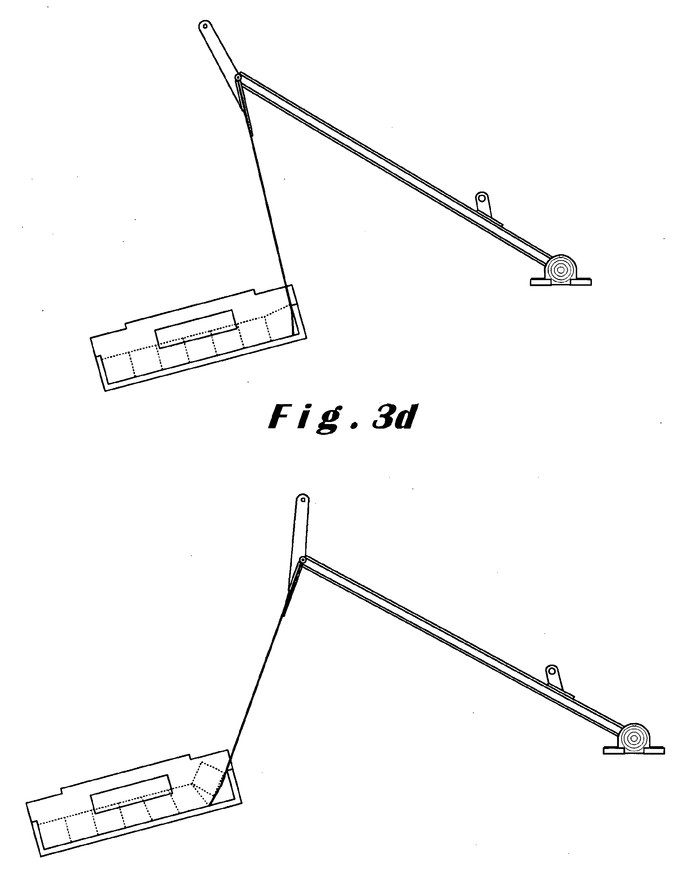

The support moving means 14 preferably include an arm 18 which is pivotally connected to the plate 5 by means of the coupling means 15. The arm 18 is also rotatable disposed with respect to a horizontal. By adopting such an arrangement, the rotating and sliding movement of the plate 5 can be realized as shown in Figures 3d - 3h by a rotation of the arm 18 relative to the horizontal, and as a result thereof, the rotation of the plate relative to the arm, limited by the tray 6 which is in a fixed position relative to the arm 18, after insertion of the first part 2 of the plate 5 between the substrate 8 and the raised edge 7. Preferably, for this purpose, the tray 6 is disposed obliquely with respect to the horizontal, as shown in Figures 3a - 3k, in a resting position. More preferably, the centre of rotation of the arm 18 also moves during rotation away from the tray 6 along the horizontal.

After the substrate 8 is placed onto the plate 5, the plate 5 can be rotated according to a vertical axis of rotation to move the substrate over a further processing location, and to deliver the substrate at that location, for example, by having it slide of the plate 5, for example by bringing the plate in an inclined position. The subsequent processing location may comprise, for example, a conveyor belt which subsequently transports the substrate, or the partial substrates.

Preferably, a system is provided to transport the empty tray 6 after lifting the substrate 8 from the tray 6, away from the resting location to a subsequent location, and/or to provide a new tray 6 to the resting location. Such a system contains, for example, one or more conveyor belts. Such a system is, however, not mandatory for the invention, and can be further developed by the skilled person.

## Claims

1. Method for lifting a substrate, provided with at least one seedling (8), from a tray (6), bound by a raised edge (7), wherein a support (1) with a front end (4) of the support (1) is slid under the substrate (8) along a bottom side (12) of the substrate (8), oriented towards a support side (9) of the tray (6) along a sliding direction (10) until the substrate (8) rests on the support (1) and the support (1) subsequently lifts the substrate (8), provided with the seedling, from the tray (6), wherein the support is a plate (5), **characterized in that** the support (1) is slid under the substrate (8) by inserting a first part (2) of the plate (5) under at least a part of the substrate (8), by inserting the first part (2) of the plate (5) between the raised edge of the tray (6) and the substrate (8), and the plate (5) and the tray (6) move relative to each other, such that the plate (5) rotates relative to the tray (6) about an axis of rotation between the first part (2) and a second part (3) of the plate (5), opposite to the first part (2), and the second part (3) moves towards the support side (9) of the tray (6), and the front end (4) of the support (1) slides along the support side (9) of the tray (6) between the bottom side (12) of the substrate (8) and the support side (9) of the tray (6) along the sliding direction (10), wherein the first part (2) is closer to the front end (4) than the second part (3), and the first part (2) has a length along the sliding direction (10) which is substantially equal to the height of the substrate (b).

2. A method according to claim 1, **characterized in that** the plate (5) is divided into the first (2) and the second part (3) by a bend (11), transverse to the sliding direction (10), along the sliding direction (10), and that the rotation of the plate (5) relative to the tray (6) is effected about an axis of rotation along the bend (11) and the bend (11) thereby moves towards the support side (9) of the tray (6).

3. Method according to claim 2, **characterized in that** the length of the first part (2) along the sliding direction (10) is 3 cm - 8 cm, 4 cm - 7 cm, 4 cm - 6 cm, 5 cm.

4. Method according to claim 2 or 3, **characterized in that** the angle (a) in degrees between the first and the second part (2, 3) formed by the bend (11) is substantially equal to 180 ° - Bgtg (h/(B - x.b)), wherein h is the depth of the tray (6), B is the length of the inside of the tray (6) measured along the sliding direction (10), b is the height of the substrate (8), and x is a factor which varies between 0.8 and 1.4.

5. Method according to any one of claims 2 - 4, **characterized in that** the angle (a) in degrees between the first and the second part (2, 3) formed by the bend (11) is between 160 ° - 175 °.

6. A method according to any one of the preceding claims, **characterized in that** the substrate (8) abuts the raised edge (7).

7. Method according to any one of the preceding claims, **characterized in that** the substrate (8) is provided with a plurality of seedlings.

8. Method according to any one of the preceding claims, **characterized in that** the substrate (8) is composed of separate partial substrates (13), wherein each partial substrate (13) is provided with at least one seedling.

9. Method according to any one of the preceding claims, **characterized in that** the length of the front end (4) transverse to the sliding direction (10) is equal to the distance between two opposite parts of the raised edge (7), such that the front end (4) extends between the two opposite parts of the raised edge (7).

10. Method according to claim 9, **characterized in that** the length of the front end (4) is 60 cm.

11. Method according to any one of the preceding claims, **characterized in that** the first and the second part (2, 3) are substantially flat.

12. Device for lifting a substrate, provided with at least one seedling (8), from a tray (6), bound by a raised edge (7), in accordance with the method according to any one of the claims 1 - 10, wherein the device is provided with support moving means (14) provided to slide a support (1) with a front end (4) of the support (1) under the substrate (8) along a bottom side (12) of the substrate (8), oriented towards a support side (9) of the tray (6) along a sliding direction (10) until the substrate (8) rests on the support (1) and to subsequently lift the substrate (8) provided with the seedling from the tray (6) by means of the support (1), wherein the support (1) is a plate (5) wherein a first part (2) has a length along the sliding direction (10) which is substantially equal to the height (b) of the substrate, and wherein the support moving means (14) are provided to slide the support (1) under the substrate (8) by inserting a first part (2) of the plate (5) under at least a part of the substrate (8), by inserting the first part (2) of the plate (5) between the raised edge of the tray (6) and the substrate (8), and by moving the plate (5) and the tray (6) relative to each other, such that the plate (5) rotates in respect of the tray (6) about an axis of rotation between the first part (2) and a second part (3) of the plate (5), opposite to the first part (2), and the second part (3) moves towards the support side (9) of the tray (6) during rotation, and the front end (4) of the support (1) slides along the support side (9) of the tray (6) between the bottom side (12) of the substrate (8) and the support side (9) of the tray (6) along the sliding direction (10).

13. Device according to claim 12, **characterized in that** the plate (5) along the sliding direction (10) is divided into the first (2) and the second part (3) by a bend (11), transverse to the sliding direction (10), wherein the first part (2) is positioned closer to the front end (4) than the second part (3), and that the rotation axis of the rotation of the plate (5) is located relative to the tray (6) along the bend (11), and the bend (11) moves towards the support side (9) of the tray (6) during this rotation.

14. Device according to claim 13, **characterized in that** the length of the first part (2) along the sliding direction (10) is 3 cm - 8 cm, 4 cm - 7 cm, 4 cm - 6 cm, 5 cm.

## Patentansprüche

1. Verfahren zum Anheben eines Substrats, welches mit mindestens einem Keimling (8) versehen ist, von einer Schale (6), die durch einem erhöhten Rand (7) begrenzt ist, wobei eine Unterlage (1) mit einem vorderen Ende (4) der Unterlage (1) entlang einer unteren Seite (12) des Substrats (8) unter das Substrat (8) geschoben wird, entlang einer Schieberichtung (10) in Richtung einer Unterlagenseite (9) der Schale (6) orientiert, bis das Substrat (8) auf der Unterlage (1) ruht, und die Unterlage (1) anschließend das Substrat (8), welches mit dem Keimling versehen ist, von der Schale (6) anhebt, wobei die Unterlage eine Platte (5) ist, **dadurch gekennzeichnet, dass** die Unterlage (1) durch Einführen eines ersten Teils (2) der Platte (5) unter zumindest einen Teil des Substrats (8) durch Einführen des ersten Teils (2) der Platte (5) zwischen den erhöhten Rand der Schale (6) und das Substrat (8) unter das Substrat (8) geschoben wird und die Platte (5) und die Schale (6) sich relativ zueinander bewegen, so dass sich die Platte (5) relativ zu der Schale (6) um eine Drehachse zwischen dem ersten Teil (2) und einem zweiten Teil (3) der Platte (5) gegenüber dem ersten Teil (2) dreht und sich der zweite Teil (3) in Richtung der Unterlagenseite (9) der Schale (6) bewegt und das vordere Ende (4) der Unterlage (1) zwischen der unteren Seite (12) des Substrats (8) und der Unterlagenseite (9) der Schale (6) entlang der Schieberichtung (10) entlang der Unterlagenseite (9) der Schale (6) gleitet, wobei sich der erste Teil (2) näher an dem vorderen Ende (4) befindet als der zweite Teil (3) und der erste Teil (2) eine Länge entlang der Schieberichtung (10) aufweist, welche im Wesentlichen gleich der Höhe des Substrats (b) ist.

2. Verfahren nach Anspruch 1, **dadurch gekennzeichnet, dass** die Platte (5) durch eine Biegung (11) quer zu der Schieberichtung (10) entlang der Schieberichtung (10) in den ersten (2) und den zweiten Teil (3) geteilt ist und dass die Drehung der Platte (5) relativ zu der Schale (6) um eine Drehachse entlang der Biegung (11) bewirkt wird und sich die Biegung (11) dadurch in Richtung der Unterlagenseite (9) der Schale (6) bewegt.

3. Verfahren nach Anspruch 2, **dadurch gekennzeichnet, dass** die Länge des ersten Teils (2) entlang der Schieberichtung (10) 3 cm bis 8 cm, 4 cm bis 7 cm, 4 cm bis 6 cm, 5 cm beträgt.

4. Verfahren nach Anspruch 2 oder 3, **dadurch gekennzeichnet, dass** der Winkel (a) in Grad zwischen dem ersten und zweiten Teil (2, 3), der durch die Biegung (11) gebildet wird, im Wesentlichen 180° - Bgtg (h/(B - x.b)) beträgt, wobei h die Tiefe der Schale (6) ist, B die Länge der Innenseite der Schale (6) ist, gemessen entlang der Schieberichtung (10), b die Höhe des Substrats (8) ist und x ein Faktor ist, welcher von 0,8 bis 1,4 variiert.

5. Verfahren nach einem der Ansprüche 2 bis 4, **dadurch gekennzeichnet, dass** der Winkel (a) in Grad zwischen dem ersten und dem zweiten Teil (2, 3), der durch die Biegung (11) gebildet wird, 160° bis 175° beträgt.

6. Verfahren nach einem der vorhergehenden Ansprüche, **dadurch gekennzeichnet, dass** das Substrat (8) an den erhöhten Rand (7) stößt.

7. Verfahren nach einem der vorhergehenden Ansprüche, **dadurch gekennzeichnet, dass** das Substrat (8) mit mehreren Keimlingen versehen ist.

8. Verfahren nach einem der vorhergehenden Ansprüche, **dadurch gekennzeichnet, dass** das Substrat (8) aus getrennten Teilsubstraten (13) zusammengesetzt ist, wobei jedes Teilsubstrat (13) mit mindestens einem Keimling versehen ist.

9. Verfahren nach einem der vorhergehenden Ansprüche, **dadurch gekennzeichnet, dass** die Länge des vorderen Endes (4) quer zu der Schieberichtung (10) gleich dem Abstand zwischen zwei gegenüber liegenden Teilen des erhöhten Rands (7) ist, so dass sich das vordere Ende (4) zwischen den zwei gegenüber liegenden Teilen des erhöhten Rands (7) erstreckt.

10. Verfahren nach Anspruch 9, **dadurch gekennzeichnet, dass** die Länge des vorderen Endes (4) 60 cm beträgt.

11. Verfahren nach einem der vorhergehenden Ansprüche, **dadurch gekennzeichnet, dass** der erste und der zweite Teil (2, 3) im Wesentlichen eben sind.

12. Vorrichtung zum Anheben eines Substrats, welches mit mindestens einem Keimling (8) versehen ist, von einer Schale (6), die durch einem erhöhten Rand (7) begrenzt ist, gemäß dem Verfahren nach einem der Ansprüche 1 bis 10, wobei die Vorrichtung mit einem Unterlagenbewegungsmittel (14) versehen ist, welches dafür vorgesehen ist, eine Unterlage (1) mit einem vorderen Ende (4) der Unterlage (1) entlang einer unteren Seite (12) des Substrats (8) unter das Substrat (8) zu schieben, entlang einer Schieberichtung (10) in Richtung einer Unterlagenseite (9) der Schale (6) orientiert, bis das Substrat (8) auf der Unterlage (1) ruht, und anschließend das Substrat (8), welches mit dem Keimling versehen ist, mittels der Unterlage (1) von der Schale (6) anzuheben, wobei die Unterlage (1) eine Platte (5) ist, wobei ein erster Teil (2) eine Länge entlang der Schieberichtung (10) aufweist, welche im Wesentlichen gleich der Höhe (b) des Substrats ist, und wobei das Unterlagenbewegungsmittel (14) dafür vorgesehen ist, die Unterlage (1) durch Einführen eines ersten Teils (2) der Platte (5) unter zumindest einen Teil des Substrats (8) durch Einführen des ersten Teils (2) der Platte (5) zwischen den erhöhten Rand der Schale (6) und das Substrat (8) und durch Bewegen der Platte (5) und der Schale (6) relativ zueinander unter das Substrat (8) zu schieben, so dass sich die Platte (5) relativ zu der Schale (6) um eine Drehachse zwischen dem ersten Teil (2) und einem zweiten Teil (3) der Platte (5) gegenüber dem ersten Teil (2) dreht und sich der zweite Teil (3) während der Drehung in Richtung der Unterlagenseite (9) der Schale (6) bewegt und das vordere Ende (4) der Unterlage (1) zwischen der unteren Seite (12) des Substrats (8) und der Unterlagenseite (9) der Schale (6) entlang der Schieberichtung (10) entlang der Unterlagenseite (9) der Schale (6) gleitet.

13. Vorrichtung nach Anspruch 12, **dadurch gekennzeichnet, dass** die Platte (5) durch eine Biegung (11) quer zu der Schieberichtung (10) entlang der Schieberichtung (10) in den ersten (2) und den zweiten Teil (3) geteilt ist, wobei sich der erste Teil (2) näher an dem vorderen Ende (4) befindet als der zweite Teil (3), und dass die Drehachse der Drehung der Platte (5) relativ zu der Schale (6) entlang der Biegung (11) angeordnet ist und sich die Biegung (11) während dieser Drehung in Richtung der Unterlagenseite (9) der Schale (6) bewegt.

14. Vorrichtung nach Anspruch 13, **dadurch gekennzeichnet, dass** die Länge des ersten Teils (2) entlang der Schieberichtung (10) 3 cm bis 8 cm, 4 cm bis 7 cm, 4 cm bis 6 cm, 5 cm beträgt.

## Revendications

1. Procédé pour soulever un substrat pourvu d'au moins un plantule (8) d'un plateau (6) limité par un bord (7) surélevé, selon lequel un support (1) avec une extrémité avant (4) du support (1) est glissé sous le substrat (8) le long d'un côté inférieur (12) du substrat (8), orienté vers un côté porteur (9) du plateau (6), le long d'une direction de glissement (10) jusqu'à ce que le substrat (8) repose sur le support (1) et le support (1) soulève ensuite le substrat (8) pourvu du plantule du plateau (6), selon lequel le support est une plaque (5), **caractérisé en ce que** le support (1) est glissé sous le substrat (8) en insérant une première partie (2) de la plaque (5) sous au moins une partie du substrat (8) en insérant la première partie (2) de la plaque (5) entre le bord surélevé du plateau (6) et le substrat (8), et la plaque (5) et le plateau (6) se meuvent l'un par rapport à l'autre de sorte que la plaque (5) tourne par rapport au plateau (6) autour d'un axe de rotation entre la première partie (2) et une deuxième partie (3), opposée à la première partie (2), de la plaque (5) et la deuxième partie (3) se meut vers le côté porteur (9) du plateau (6), et l'extrémité avant (4) du support (1) glisse le long du côté porteur (9) du plateau (6) entre le côté inférieur (12) du substrat (8) et le côté porteur (9) du plateau (6) le long de la direction de glissement (10), la première partie (2) étant plus proche de l'extrémité avant (4) que la deuxième partie (3), et la première partie (2) a une longueur le long de la direction de glissement (10) qui est sensiblement égale à la hauteur (b) du substrat.

2. Procédé selon la revendication 1, **caractérisé en ce que** la plaque (5) est divisée le long de la direction de glissement (10) en la première (2) et la deuxième partie (3) par une pliure (11) transversale à la direction de glissement (10) et **en ce que** la rotation de la plaque (5) par rapport au plateau (6) est effectuée autour d'un axe de rotation le long de la pliure (11) et la pliure (11) se meut de ce fait vers le côté porteur (9) du plateau (6).

3. Procédé selon la revendication 2, **caractérisé en ce que** la longueur de la première partie (2) le long de la direction de glissement (10) est de 3 cm - 8 cm, 4 cm - 7 cm, 4 cm - 6 cm, 5 cm.

4. Procédé selon la revendication 2 ou 3, **caractérisé en ce que** l'angle (a) en degrés entre la première et la deuxième partie (2, 3) formé par la pliure (11) est sensiblement égal à 180° - Bgtg (h/(B - x.b)), h étant la profondeur du plateau (6), B étant le longueur de l'intérieur du plateau (6) mesurée le long de la direction de glissement (10), b étant la hauteur du substrat (8) et x étant un facteur qui varie entre 0,8 et 1,4.

5. Procédé selon l'une quelconque des revendications 2 - 4, **caractérisé en ce que** l'angle (a) en degrés entre la première et la deuxième partie (2, 3) formé par la pliure (11) est compris entre 160 ° - 175 °.

6. Procédé selon l'une quelconque des revendications précédente, **caractérisé en ce que** le substrat (8) bute contre le bord surélevé (7).

7. Procédé selon l'une quelconque des revendications précédente, **caractérisé en ce que** le substrat (8) est pourvu d'une pluralité de plantules.

8. Procédé selon l'une quelconque des revendications précédente, **caractérisé en ce que** le substrat (8) est composé de substrats partiels (13) séparés, chaque substrat partiel (13) étant pourvu d'au moins un plantule.

9. Procédé selon l'une quelconque des revendications précédente, **caractérisé en ce que** la longueur de l'extrémité avant (4) transversale à la direction de coulissement (10) est égale à la distance entre deux parties opposées du bord surélevé (7) de sorte que l'extrémité avant (4) s'étend entre les deux parties opposées du bord surélevé (7).

10. Procédé selon la revendication 9, **caractérisé en ce que** la longueur de l'extrémité avant (4) est de 60 cm.

11. Procédé selon l'une quelconque des revendications précédente, **caractérisé en ce que** la première et la deuxième partie (2, 3) sont sensiblement plates.

12. Dispositif pour soulever un substrat pourvu d'au moins un plantule (8) d'un plateau (6) limité par un bord surélevé (7) conformément au procédé selon l'une quelconque des revendications 1 - 10, le dispositif étant pourvu de moyens de déplacement de support (14) prévus pour glisser un support (1) avec une extrémité avant (4) du support (1) sous le substrat (8) le long d'un côté inférieur (12) du substrat (8), orienté vers un côté porteur (9) du plateau (6), le long d'une direction de glissement (10) jusqu'à ce que le substrat (8) repose sur le support (1) et pour ensuite soulever le substrat (8) pourvu du plantule du plateau (6) au moyen du support (1), le support (1) étant une plaque (5) dont une première partie (2) a une longueur le long de la direction de glissement (10) qui est sensiblement égale à la hauteur (b) du substrat, et les moyens de déplacement de support (14) étant prévus pour glisser le support (1) sous le substrat (8) en insérant une première partie (2) de la plaque (5) sous au moins une partie du substrat (8) en insérant la première partie (2) de la plaque (5) entre le bord surélevé du plateau (6) et le substrat (8), et en déplaçant la plaque (5) et le plateau (6) l'un par rapport à l'autre de sorte que la plaque (5) tourne par rapport au plateau (6) autour d'un axe de rotation entre la première partie (2) et une deuxième partie (3), opposée à la première partie (2), de la plaque (5) et la deuxième partie (3) se meut vers le côté porteur (9) du plateau (6) pendant la rotation, et l'extrémité avant (4) du support (1) glisse le long du côté porteur (9) du plateau (6) entre le côté inférieur (12) du substrat (8) et le côté porteur (9) du plateau (8) le long de la direction de glissement (10).

13. Dispositif selon la revendication 12, **caractérisé en ce que** la plaque (5) est divisée le long de la direction de glissement (10) en la première (2) et la deuxième partie (3) par une pliure (11) transversale à la direction de glissement (10), la première partie (2) étant positionnée plus près de l'extrémité avant (4) que la deuxième partie (3), et **en ce que** l'axe de rotation de la plaque (5) est situé par rapport au plateau (6) le long de la pliure (11), et la pliure (11) se meut en direction du côté porteur (9) du plateau (6) pendant la rotation.

14. Dispositif selon la revendication 13, **caractérisé en ce que** la longueur de la première partie (2) le long de la direction de glissement (10) est de 3 cm - 8 cm, 4 cm - 7 cm, 4 cm - 6 cm, 5 cm.
